# DEMANDE DE BREVET EUROPEEN

(11) **EP 0 740 912 A1**
(43) Date de publication de la demande: **06.11.1996**
(21) Numéro de dépôt: 96400944.3
(22) Date de dépôt: 03.05.1996
(51) Int. Cl.: A45D 34/04, B29C 49/00

(54) **Contenant en matière synthétique presentant un corps et un col en une seule pièce, procédé d'obtention par injection-soufflage**

(30) Priorité: 05.05.1995 FR 9505427
(71) Demandeur: SOCIETE GENERALE DE BROSSERIE Société Anonyme, 60250 Mouy (Oise) (FR)
(72) Inventeur: Lhoyer, Denis, Jean-Marie, 60300 Senlis (Oise) (FR)
(74) Mandataire: Rataboul, Michel Charles

(57) **Abrégé**

Le contenant est du type comprenant un corps qui est fermé par un fond et qui a une ouverture raccordée à un passage de sortie intérieur à un col et présentant un étranglement intérieur et une surface extérieure munie de moyens destinés à recevoir une contrepartie appartenant à un organe mobile de fermeture du passage de sortie.

Il est caractérisé en ce que le col (2) a un passage intérieur (9-12-15) à paroi lisse et qui présente au moins deux diamètres différents (10 et 11), tandis que la surface extérieure dudit col (2) est continûment cylindrique et se raccorde à la partie extérieure d'une cloison (14) substantiellement transversale possédant une partie intérieure qui s'étend jusqu'au passage intérieur (9-12-15) et sur laquelle se trouve le plus petit (11) des diamètres (10 et 11), le corps (1), son fond (1a), le col (2) et la cloison (14) étant en une seule pièce.

## Description

Certains produits doivent être extraits de leur contenant par petites quantités et, à cet effet, les contenants sont munis de moyens particuliers au lieu de posséder une simple ouverture.

Il est assez fréquent, par exemple, de devoir limiter la section de sortie d'un contenant en créant un petit canal à l'intérieur d'un col qui doit, lui, avoir un contour extérieur assez gros, notamment pour recevoir un bouchon.

Quand un tel contenant est réalisé en matière synthétique, il a une forte épaisseur localisée sur le col alors que le corps a une paroi relativement mince et l'on sait que cela constitue un grave inconvénient du fait qu'en se refroidissant la matière se rétracte et elle ne peut pas le faire régulièrement si ses différentes parties n'ont pas une épaisseur aussi constante que possible.

C'est pourquoi, au lieu de créer un petit canal sur toute la hauteur d'un gros col, on crée un étranglement dans un passage de plus grande section, compatible avec la forme extérieure.

Ainsi, on réalise toujours des formes qui donnent un profil intérieur et un profil extérieur parallèles, la matière ayant ainsi une épaisseur constante.

Les tubes flexibles contenant un produit pâteux tel que de la pâte dentifrice, une crème cosmétique, etc. sont généralement fabriqués à partir d'une gaine tubulaire dont l'épaisseur est constante, qui est munie d'un col et d'un orifice de sortie mais qui n'a pas de fond. Le tube est ainsi rempli de produit par l'extrémité ouverte de la gaine puis celle-ci est aplatie et déformée, enroulée, collée ou soudée, ce qui donne au tube fini une forme très caractéristique.

Cette forme est inutilisable pour d'autres contenants tels que des flacons et si l'on doit néanmoins partir d'une gaine sans fond, il faut, après remplissage, rapporter un fond plat, ce qui constitue une opération supplémentaire.

Parmi les contenants devant présenter un étranglement sur un canal de sortie, on peut citer ceux dans lesquels se trouvent des produits que l'on applique avec un pinceau, une brosse, une spatule, etc. car il est recommandé de prévoir des moyens d'essorage ou de grattage destinés à retirer le surplus de produit qui se trouve sur le pinceau, la brosse ou la spatule.

Parmi ces contenants, on peut citer ceux qui contiennent du mascara devant être appliqué sur les cils au moyen d'une petite brosse qui plonge dans le produit et qui est essorée, lorsqu'on l'extrait du contenant, grâce à un étranglement prévu à l'intérieur d'un col du contenant, étranglement qui a une section de passage un peu plus étroite que le diamètre de la brosse, de sorte que les poils de celle-ci sont pressés et expulsent une partie du produit qu'ils emprisonnaient.

Ces contenants sont fabriqués en deux parties distinctes : le contenant proprement dit, moulé en matière synthétique, qui comprend un corps creux prolongé par un col d'une part et un "essoreur" formé par un embout tubulaire qui porte l'étranglement et qui est engagé à force dans le col.

La fabrication en deux pièces de ces contenants est une complication qui conduit à un prix de revient plus élevé qu'il ne devrait l'être, du fait qu'il faut disposer de deux moules distincts, qu'il faut assurer les manipulations nécessaires aux deux opérations de moulage et qu'il faut assembler les deux pièces.

Cependant, certains documents représentent par un dessin schématique des contenants en une seule pièce avec l'essoreur, bien qu'aucune solution concrète et réalisable avec des moyens industriels réels ne soit proposée.

Pour illustrer ce fait, on peut citer les documents suivants :
- Le document EP-A-668 036 qui décrit un contenant à mascara présentant, sur la figure 2 du dessin, une version selon laquelle le récipient proprement dit 1, son fond (non référencé) et un essoreur 7 sont tous trois en une seule pièce.

Cependant, aucune solution n'est indiquée pour obtenir industriellement un tel produit qui, tel quel, ne peut pas être fabriqué par injection de matière synthétique.

En outre, on remarque que l'essoreur 7 a une partie inférieure qui comporte une lèvre circulaire (et non une cloison transversale) qui descend beaucoup plus bas que le col, de sorte que l'étranglement n'est pas situé à hauteur du col, contrairement à la structure revendiquée dans la demande étudiée, cette lèvre étant, d'ailleurs, impossible à réaliser dans la pratique.

Qu'il s'agisse du fond et du récipient ou de l'essoreur et du récipient, le dessin est purement théorique et ne correspond à aucune réalité industrielle. En tous cas, faute de description complète et détaillée, l'Homme de Métier n'a aucune information lui permettant de réaliser un tel article.
- Le document EP-A-089 178 qui concerne un objet illustrant bien l'Etat de la Technique tel que celui-ci est décrit ci-dessus.
- Le document FR-A-2 515 941 qui décrit un flacon à mascara dont l'essoreur est distinct du corps puisqu'il s'agit d'un manchon indépendant : "... le manchon d'essorage 24 est maintenu à l'intérieur du col fileté 21 du flacon au moyen du bourrelet annulaire 23 sur lequel il s'appuie. (page 6, ligne 33 à page 7, ligne 2) et "L'utilisatrice en vissant la bague de manoeuvre 25 sur le col 21 du flacon provoque un enfoncement correspondant de la jupe intérieure 27 de la bague à l'intérieur du col 21 et un écrasement axial du manchon d'essorage 24, fonction du degré de vissage." (page 8, lignes 16 à 20).

Dans la version représentée sur la figure 5, on voit que l'essoreur 60 "... a la forme d'un doigt de gant réalisé en une matière souple élastiquement déformable, telle que du caoutchouc naturel ou synthétique par exemple." (page 10, lignes 21 à 23) et qu'il est distinct et même mobile par rapport au corps puisqu'il "... peut, entre autre, prendre trois positions angulaires caractéristiques ..." (page 12, lignes 7 et 8).
- Le document EP-A-116 952 qui décrit un flacon dont on voit bien, sur la figure 1, que l'essoreur ne possède aucunement deux diamètres différents, qu'il soit indépendant du récipient ou pas.
- Le document EP-A-378 047 qui concerne un flacon ne présentant pas d'étranglement, ni d'essoreur à deux diamètres différents, ni col. Le flacon décrit possède deux parties concentriques 2 et 3a, séparées par un espace annulaire 3, et le procédé décrit est directement lié à l'obtention et à l'utilisation de ces deux parties annulaires dont la fabrication nécessite des moules en plusieurs parties.

Le fait qu'il décrive aussi le soufflage d'une ébauche n'est que l'utilisation d'une phase connue de l'Etat de la Technique et qui n'est pas revendiquée en soi dans la présente demande.
- Le document FR-A-1 515 666 qui concerne le moulage de pots de yaourts n'ayant aucune des caractéristiques du contenant selon la demande.
- Le document FR-A-74.01969 qui décrit un procédé et un appareil pour la fabrication de récipients emboîtables, ce qui démontre que ces récipients ne peuvent pas avoir un col de diamètre inférieur au récipient proprement dit.

Certains de ces documents montrent (bien qu'ils ne soient pas réalisables) des contenants à mascara ayant diverses caractéristiques et dont les dessins, du fait même de leur caractère très schématique, ont des lignes de coupe et des hachures qui ne marquent aucune différence entre le récipient lui-même, son fond et l'essoreur.

La présente invention remédie à ces inconvénients en permettant de réaliser effectivement, avec des moyens industriels réels, ces contenants en une seule pièce sans aucunement sacrifier leur efficacité, leur esthétique ou leur commodité.

A cette fin, l'invention a pour objet un contenant du type comprenant un corps qui est fermé par un fond et qui a une ouverture raccordée à un passage de sortie intérieur à un col et présentant un étranglement intérieur et une surface extérieure munie de moyens destinés à recevoir une contrepartie appartenant à un organe mobile de fermeture du passage de sortie, caractérisé en ce que le col a un passage intérieur à paroi lisse et qui présente au moins deux diamètres différents, tandis que la surface extérieure dudit col est continûment cylindrique et se raccorde à la partie extérieure d'une cloison substantiellement transversale possédant une partie intérieure qui s'étend jusqu'au passage intérieur et sur laquelle se trouve le plus petit des diamètres, le corps, son fond, le col et la cloison étant en une seule pièce.

Selon d'autres caractéristiques de ce contenant :
- les deux diamètres les plus éloignés l'un de l'autre sont reliés par une paroi continue tronconique qui forme une grande base constituant une embouchure et une petite base constituant l'étranglement.

L'invention a également pour objet un procédé pour la fabrication d'un contenant du type comprenant un corps qui est fermé par un fond et qui a une ouverture raccordée à un passage de sortie qui est intérieur à un col et qui présente au moins deux diamètres différents, caractérisé en ce que :
* on utilise d'une part un moule en deux pièces présentant chacune au moins une empreinte ayant un passage débouchant à l'extérieur du moule, les empreintes des pièces placées l'une contre l'autre déterminant ensemble, deux à deux, une cavité débouchant à l'extérieur et, d'autre part, un noyau engagé amoviblement dans chaque cavité lorsque le moule est ouvert, noyau qui a deux sections différentes, à savoir une section ayant les formes et dimensions correspondant au passage intérieur du col du contenant et une section d'extrémité de formes et dimensions correspondant à l'intérieur d'une ébauche du corps du contenant, tandis que la cavité a des formes et dimensions correspondant à l'extérieur de cette ébauche et le passage a les formes et dimensions de l'extérieur du col,
* on injecte une matière synthétique dans chaque cavité du moule pour créer autant d'ébauches moulées intérieurement sur le noyau et extérieurement dans la cavité,
* on sépare les deux pièces du moule pour que celui-ci soit ouvert,
* on extrait ensemble hors du moule ouvert le noyau et l'ébauche moulée sur lui, de chaque cavité,
* on introduit ce noyau et cette ébauche dans une empreinte d'un moule en deux pièces analogue au précédent mais dont les empreintes forment ensemble, deux à deux, une cavité ayant les formes et dimensions de l'extérieur du corps du contenant, chaque cavité communiquant avec l'extérieur par un passage ayant les formes et dimensions de l'extérieur du col déjà moulé afin de recevoir celui-ci,
* on ferme le moule en plaçant ses deux pièces l'une sur l'autre,
* on introduit dans l'ébauche, par l'intérieur creux du noyau, de l'air comprimé à une pression telle que la matière dont l'ébauche est faite se déforme et s'expanse jusqu'à épouser les formes de la cavité et présenter ainsi les dimensions et les formes du corps du contenant,
* on sépare les deux pièces du moule pour que celui-ci soit ouvert,
* on extrait hors du moule ouvert le noyau et le contenant qui tient à lui par l'intérieur de son col,
* on sépare le noyau du contenant terminé, présentant en une seule pièce le corps, son fond et le col.

L'invention sera mieux comprise par la description détaillée ci-après faite en référence au dessin annexé. Bien entendu, la description et le dessin ne sont donnés qu'à titre d'exemple indicatif et non limitatif.

La figure 1 est une vue schématique en coupe montrant un contenant conforme à l'invention, pour du mascara devant être appliqué au moyen d'une brosse fixée à l'extrémité d'une tige solidaire d'un bouchon à vis.

La figure 2 est une vue schématique en coupe de ce même contenant dans la position intermédiaire durant laquelle la brosse est essorée lors de son extraction.

La figure 3 est une vue schématique en coupe du même contenant lorsque l'on remet la brosse en place.

La figure 4 est une vue schématique en coupe du même contenant, équivalente à la figure 1, lorsque la brosse est remise en place et le bouchon revissé.

Les figures 5 à 7 sont des vues schématiques partielles en coupe montrant trois variantes de réalisation d'un col de contenant, selon l'invention.

Les figures 8 à 15 illustrent le procédé de moulage d'un contenant conforme à l'invention. Plus précisément :

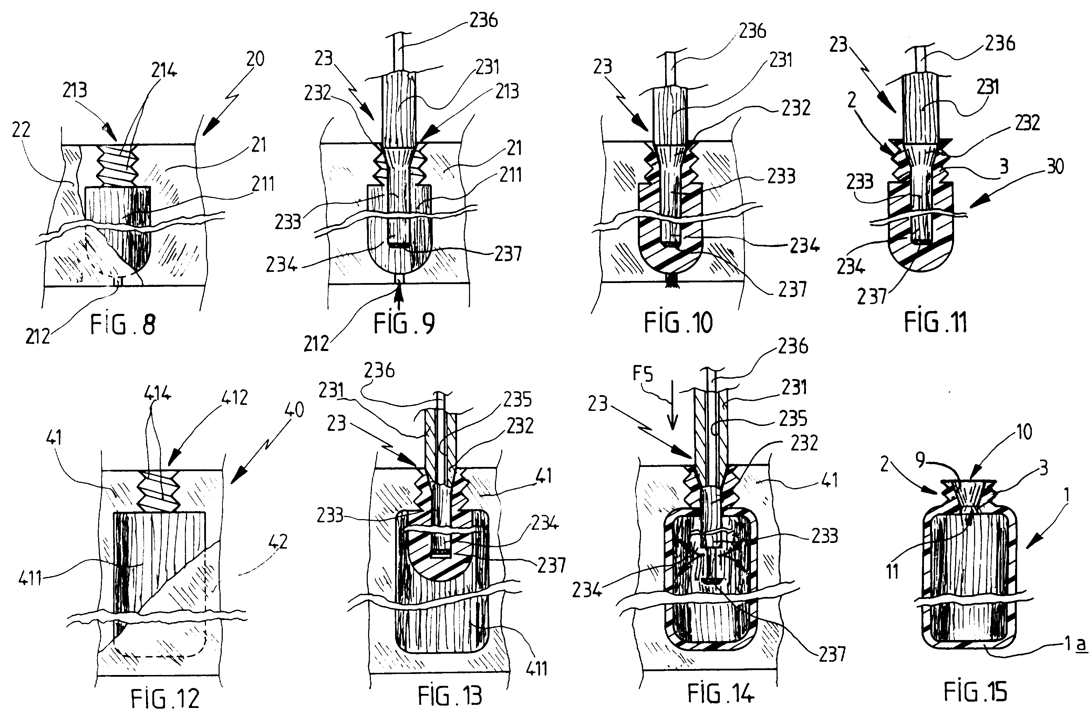

Les figures 8 et 9 sont deux vues schématiques en plan montrant un moule destiné à la formation, par injection d'une matière synthétique, d'une ébauche de contenant conforme à l'invention, l'une avant mise en place d'un noyau, l'autre après mise en place du noyau.

La figure 10 est une vue schématique montrant l'ébauche moulée mais encore dans le moule.

La figure 11 est une vue schématique montrant l'ébauche extraite du moule et tenant sur le noyau par l'intérieur du col.

La figure 12 est une vue schématique en plan montrant un moule de finition dont chaque cavité a les formes et dimensions définitives du corps du contenant, destiné à la mise en forme de l'ébauche de la figure 11 pour terminer le contenant.

La figure 13 est une vue schématique en plan du moule de la figure 12, après mise en place de l'ébauche et du noyau de la figure 11.

La figure 14 est une vue schématique en coupe illustrant le soufflage de l'ébauche dans le moule de finition des figures 12 et 13, afin de donner au corps du contenant les formes et dimensions dudit moule de finition.

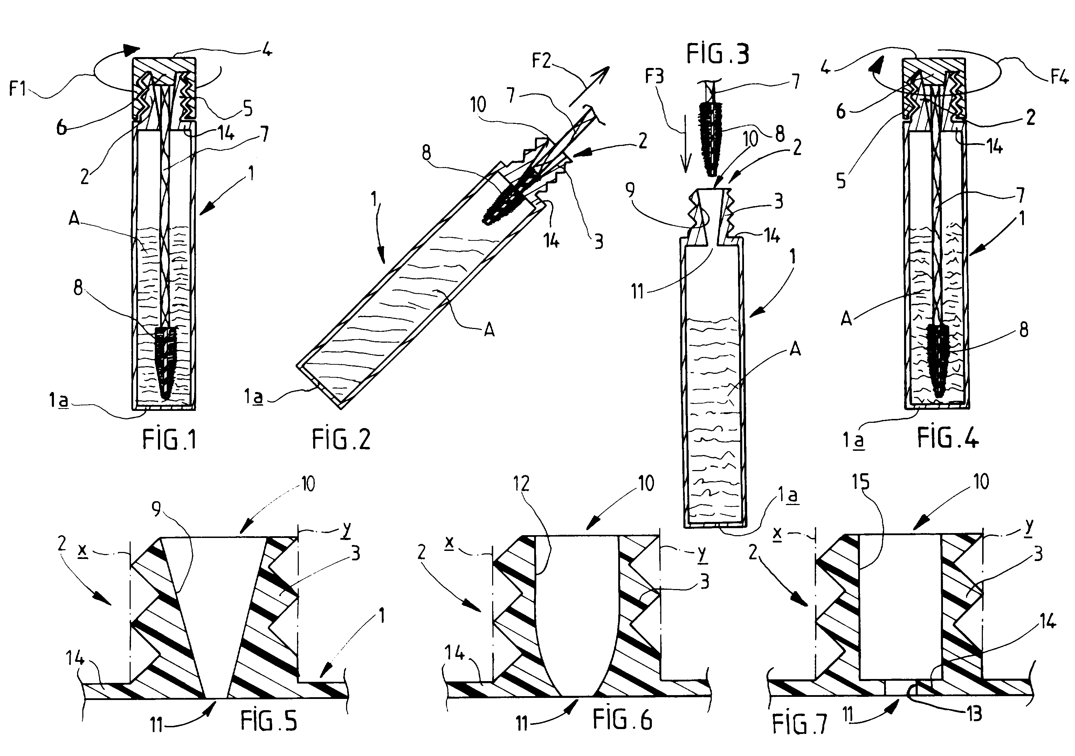

La figure 15 est une vue schématique en coupe d'un contenant conforme à l'invention terminé, du type représenté sur les figures 1 à 5.

En se reportant aux figures 1 à 4 du dessin, on voit qu'un contenant conforme à l'invention, destiné ici à l'application d'un produit au moyen d'une petite brosse, comprend un corps 1 étanche, destiné à un produit A tel que du mascara, et un col 2 dont la partie extérieure présente un filetage 3 sur lequel doit se visser un bouchon 4 dont l'intérieur présente un filetage 5 constituant une contrepartie du filetage 3.

Lorsque le bouchon 4 est en position de fermeture, par interpénétration des filetages 3 et 5, il appuie une partie tronconique 6 contre l'intérieur du col 2, le contact de ces deux éléments assurant une excellente étanchéité.

Ainsi que cela est connu en soi, le bouchon 4 est solidaire d'une tige centrale 7 sur laquelle est assujettie une brosse 8 de tout type connu.

Le col 2 a un passage intérieur central 9 à paroi lisse en forme de tronc de cône inversé, dont la grande base constitue une embouchure supérieure 10, tandis que la petite base forme un étranglement 11 au débouché du col 2 dans le corps 1.

Lorsque l'usager souhaite appliquer le mascara A, il dévisse le bouchon 4 selon la flèche F1 (figure 1), puis en tenant le bouchon 4, il extrait la tige 7 et la brosse 8.

La longueur de la tige 7 est calculée de telle sorte que la brosse 8 trempe dans le mascara A, raison pour laquelle on donne au corps 1 du contenant une section étroite et une longueur grande.

En conséquence, la brosse 8 est pratiquement toujours saturée de mascara et il faut l'essorer avant qu'elle ne sorte du contenant.

En se reportant à la figure 2, on voit que le diamètre de l'étranglement 11, formé par la petite base du tronc de cône du passage 9, est inférieur au diamètre de la brosse 8, si bien que l'on ne peut extraire cette brose 8 qu'en obligeant ses poils à ployer vers le fond du contenant lorsqu'ils passent l'étranglement 11 dans le sens de la sortie, c'est-à-dire en passant de la petite base vers la grande base du passage 9 en tronc de cône.

Comme cela est illustré par la figure 2, le resserrement des poils de la brosse 8 a pour effet d'essorer celle-ci.

Quand la brosse 8 a parcouru tout l'intérieur du passage 9, selon la flèche F2, ses poils sont débarrassés de l'excès de mascara et se sont redressés selon leur orientation naturelle, sans avoir provoqué d'éclaboussement à l'extérieur du contenant.

Après usage, la brosse 8 est réintroduite dans le contenant selon la flèche F3 de la figure 3.

Comme le contenant doit être étroit, ainsi que cela a été expliqué plus haut, l'introduction de la brosse 8 est facilitée par l'embouchure élargie 10 qui guide nécessairement la brosse 8 vers l'étranglement 11 et, au-delà, vers l'intérieur du corps 1 du contenant.

Le mouvement dans le sens de la flèche F3 de la figure 3 se poursuit jusqu'à ce que le bouchon 4 rencontre le col 2. L'usager peut alors revisser le filetage intérieur 5 du bouchon 4 sur le filetage 3 du col 2, selon la flèche F4, l'ensemble se retrouvant alors dans la même situation que celle de la figure 1.

Le contenant conforme à l'invention, comme on vient de le voir, possède, en une seule pièce, le corps 1, son fond 1a et le col 2, lequel présente extérieurement le filetage 3 et intérieurement le passage tronconique 9.

Sur la figure 5, on a représenté, à plus grande échelle, le col 2 des figures 1 à 4 et l'on voit que la paroi tronconique 9 joint en continu le grand diamètre supérieur de l'embouchure 10 et le petit diamètre inférieur de l'étranglement 11.

Cette forme, bien que son évasement ait été exagéré, est bien adaptée au cas où l'on doit introduire dans le contenant 1 un élément tel que la brosse 8, car il est bon que ses poils soient guidés pendant leur traversée du col 2, sans rencontrer d'obstacle.

La variante de la figure 6 montre que l'on peut aussi joindre en continu l'embouchure 10 et l'étranglement 11 par une paroi lisse 12 non plus rectiligne, comme la paroi 9, mais courbe.

Sur la figure 7, on a représenté une variante selon laquelle l'étranglement 11 est constitué par un passage 13 prévu au centre d'une cloison transversale 14.

Par conséquent, ici, l'embouchure 10 et l'étranglement 11 sont joints de manière discontinue par une paroi circulaire 15 et par la cloison 14, lesquelles forment un angle marqué (ici à 90°).

Cette variante est plutôt adaptée au col d'un contenant recevant un produit pâteux tel qu'un cosmétique crémeux ou de la pâte dentifrice.

Sur les trois figures 5, 6 et 7, on voit que la surface extérieure du col 2 et le filetage 3 qu'elle porte, s'inscrivent selon une surface extérieure virtuelle cylindrique symbolisée par deux lignes en traits mixtes x et y figurant deux génératrices de cette surface cylindrique.

La surface dans laquelle s'inscrivent l'extérieur du col 2 et le filetage 3 est continûment cylindrique depuis le sommet du col 2 (à l'exception d'un éventuel petit rebord de raccordement) jusqu'à la partie extérieure de la cloison 14.

La cloison 14 est substantiellement transversale et constitue extérieurement la partie supérieure du corps 1 du contenant proprement dit.

Intérieurement, la cloison 14 constitue la limite supérieure du corps 1 puisqu'au-dessus d'elle commence le col 2.

La cloison 14 s'étend jusqu'au passage intérieur 9, 12, 15 car ce passage traverse la cloison 14 selon son plus petit diamètre 11, quelle que soit la forme exacte du passage 9, 12 ou 15.

C'est grâce à cette structure que l'on peut réaliser en une seule pièce le corps 1, son fond 1a et le col 2, comme on le verra plus loin, du fait que l'on sépare en deux parties distinctes la partie supérieure du contenant : col 2 et essoreur 9-10-11, 12-10-11, 15-10-11 et la partie inférieure 1-1a.

Ayant ainsi distingué nettement la structure de la partie supérieure et la structure de la partie inférieure, la première peut être obtenue par injection, tandis que la seconde peut être obtenue par soufflage, ce que l'on va décrire maintenant en regard des figures 8 à 15.

Pour obtenir en matière synthétique le contenant que l'on vient de décrire, on utilise la méthode connue sous le nom d'injection-soufflage, qui diffère de la méthode d'extrusion, de sorte que le corps 1 et son fond 1a sont obtenus en une seule pièce alors que, par d'autres méthodes, notamment par extrusion, le fond 1a doit être rapporté ou rabattu, collé ou soudé, etc. au corps 1, ce qui présente des risques de fuite et ne donne pas une garantie dimensionnelle suffisante.

Le procédé conforme à l'invention comprend deux phases successives. La première consiste à obtenir d'une part le col 2 complet, comprenant le filetage extérieur 3, le passage tronconique 9 ou 12 (ou les parois 14 et 15) et l'étranglement 11, et d'autre part une ébauche 30 devant donner naissance, lors de la seconde phase, au corps 1 lui-même et à son fond 1a.

Pour la première phase, on utilise d'une part un moule 20 qui comprend deux pièces amovibles 21 et 22 creusées d'au moins une empreinte et, d'autre part, un noyau 23 par empreinte. Les empreintes en regard des deux pièces 21 et 22 déterminent ensemble, deux à deux, une cavité et, pour simplifier la description, on n'a représenté qu'une seule de ces empreintes dans la pièce 21, correspondant à une seule cavité.

Cette empreinte 211 communique avec l'extérieur par un canal d'injection 212 à l'opposé duquel se trouve une ouverture semi-circulaire 213 plus large que le canal 212 et présentant des rainures obliques 214.

Lorsque les deux pièces 21 et 22 sont placées l'une sur l'autre (comme sur la figure 8), le moule 20 est fermé et chaque cavité comprend donc une partie inférieure sensiblement cylindrique et une partie supérieure circulaire dont les rainures obliques 214 forment ensemble un filetage continu.

Le noyau 23 présente un corps cylindrique 231 qui se raccorde, par un épaulement tronconique 232, à un appendice plus mince 233 se terminant par une extrémité 234.

Le noyau 23 est traversé d'un canal longitudinal central 235 dans lequel s'étend une tige 236 tenant un clapet extérieur 237. Le canal 235 est raccordé à une source d'air comprimé (non représentée).

La tige 236 est susceptible de se déplacer entre deux positions extrêmes dans l'une desquelles le clapet 237 est appliqué contre l'extrémité 234 en obturant la sortie du canal 235 (figures 9 à 13) et dans l'autre desquelles le clapet est repoussé par un ressort (non représenté) pour être éloigné, au-delà de l'extrémité 234 en libérant la sortie du canal 235 (figure 14).

La forme extérieure du noyau 23, dans sa partie supérieure, correspond à celle, définitive, de l'intérieur du col 2 et lorsque le noyau 23 est mis en place dans la cavité correspondante du moule 20, il est centré et positionné de telle manière que son épaulement tronconique 232 soit au niveau de l'ouverture 213, en regard des rainures 214 (figure 9).

On injecte alors la matière synthétique par le canal 212 afin que celle-ci occupe tout l'espace compris entre les parois de la cavité et le noyau 23, c'est-à-dire depuis le fond de la cavité où débouche le canal d'injection 212 et le sommet de l'épaulement tronconique 232 du noyau 23.

Ainsi, on crée en une seule opération le col 2 définitif, avec son filetage extérieur 3 et son passage intérieur 9, et une ébauche 30, la matière synthétique moulée ayant des épaisseurs non exactement constantes mais harmonieuses (figure 10).

On ouvre le moule 20 et l'on retire de celui-ci, ensemble, le noyau 23 et l'ébauche 30 (figure 11).

Cela met fin à la première phase.

Pour la seconde phase, on place le noyau 23 et l'ébauche 30 qu'il porte, dans un moule de finition 40 présentant, lui aussi, deux pièces amovibles 41 et 42 ayant autant d'empreintes que le moule 20 et déterminant deux à deux une cavité. Comme précédemment, on n'a représenté sur les figures 12 à 14 qu'une empreinte, celle-ci comprenant d'une part une chambre 411 dont les formes et dimensions intérieures sont celles du contour extérieur du corps 1 terminé y compris son fond 1a (figure 12) et d'autre part une ouverture circulaire 412 présentant des rainures obliques 414 identiques à celles 214 du moule 20.

Le col 2 de l'ébauche 30 est placé dans l'ouverture 412, le filetage 3 s'encastrant très exactement dans les rainures 414, l'ébauche s'étendant alors jusque dans la chambre 411 (figure 13).

Lorsque le noyau 23 et l'ébauche 30 sont en place (figure 13), on introduit dans le canal 235 de l'air comprimé selon la flèche F5, qui repousse le clapet 237 et aboutit à l'intérieur de l'ébauche 30, afin de l'expanser et d'obliger la matière qui la constitue à se développer jusqu'aux parois de la chambre 411, comme l'évoquent les flèches de la figure 14.

Pour aider à la conformation de l'ébauche 30, on peut porter le moule de finition 40 à une température favorisant la malléabilité de la matière constitutive de l'ébauche 30.

On obtient ainsi le contenant 1 complet ayant un corps 1 et son fond la, ainsi que le col 2 avec son filetage 3 et son passage intérieur 9.

Après soufflage, on retire ensemble, hors du moule 40, le noyau 23 et le contenant complet qu'il porte, puis on sépare le contenant et le noyau 23, pour aboutir au contenant complet et indépendant de la figure 15 qui comprend, alors, un corps creux 1 et son fond la aux formes et dimensions voulues, un col 2, un filetage 3 pour un bouchon 4, une embouchure 10 pour guider 1a brosse 8 et un étranglement 11 pour l'essorage de la brosse 8.

Il ressort de la description ci-dessus, que le noyau 23 sert au moulage d'une partie définitive, qui ne doit pas être soufflée, ce noyau 23 ayant les formes et dimensions voulues pour ce moulage définitif.

L'intérieur du col 2 peut avoir des formes, en section et en profil, différentes de celles qui ont été retenues ici à titre d'exemple indicatif.

Les moyens permettant à un bouchon d'être assujetti au col 2 peuvent être différents du filetage décrit, car il en existe de nombreuses sortes.

## Revendications

1. Contenant du type comprenant un corps qui est fermé par un fond et qui a une ouverture raccordée à un passage de sortie intérieur à un col et présentant un étranglement intérieur et une surface extérieure munie de moyens destinés à recevoir une contrepartie appartenant à un organe mobile de fermeture du passage de sortie, caractérisé en ce que le col (2) a un passage intérieur (9-12-15) à paroi lisse et qui présente au moins deux diamètres différents (10 et 11), tandis que la surface extérieure dudit col (2) est continuement cylindrique et se raccorde à la partie extérieure d'une cloison (14) substantiellement transversale possédant une partie intérieure qui s'étend jusqu'au passage intérieur (9-12-15) et sur laquelle se trouve le plus petit (11) des diamètres (10 et 11), le corps (1), son fond (1a), le col (2) et la cloison (14) étant en une seule pièce.

2. Contenant selon la revendication 1, caractérisé en ce que les deux diamètres les plus éloignés l'un de l'autre sont reliés par une paroi continue tronconique (9) qui forme une grande base constituant une embouchure (10) et une petite base constituant l'étranglement (11).

3. Procédé pour la fabrication d'un contenant du type comprenant un corps qui est fermé par un fond et qui a une ouverture raccordée à un passage de sortie qui est intérieur à un col et qui présente au moins deux diamètres différents, caractérisé en ce que :
- on utilise d'une part un moule (20) en deux pièces (21 et 22) présentant chacune au moins une empreinte (211) ayant un passage (213) débouchant à l'extérieur du moule (20), les empreintes des pièces (21 et 22) placées l'une contre l'autre déterminant ensemble, deux à deux, une cavité débouchant à l'extérieur et, d'autre part, un noyau (23) engagé amoviblement dans chaque cavité lorsque le moule (20) est ouvert, noyau (23) qui a deux sections différentes, à savoir une section (232) ayant les formes et dimensions correspondant au passage (9-12-15) intérieur du col (2) du contenant et une section d'extrémité (233) de formes et dimensions correspondant à l'intérieur d'une ébauche (30) du corps (1) du contenant, tandis que la cavité (211) a des formes et dimensions correspondant à l'extérieur de cette ébauche (30) et le passage (213) a les formes et dimensions de l'extérieur du col (2);
- on injecte une matière synthétique dans chaque cavité du moule (20) pour créer autant d'ébauches (30) moulées intérieurement sur le noyau (23) et extérieurement dans la cavité (211);
- on sépare les deux pièces (21 et 22) du moule (20) pour que celui-ci soit ouvert;
- on extrait ensemble hors du moule (20) ouvert le noyau (23) et l'ébauche (30) moulée sur lui, de chaque cavité;
- on introduit ce noyau (23) et cette ébauche (30) dans une empreinte d'un moule (40) en deux pièces (41 et 42) analogue au précédent (20) mais dont les empreintes forment ensemble, deux à deux, une cavité (411) ayant les formes et dimensions de l'extérieur du corps (1) du contenant, chaque cavité communiquant avec l'extérieur par un passage (412) ayant les formes et dimensions de l'extérieur du col (2) déjà moulé afin de recevoir celui-ci;
- on ferme le moule (40) en plaçant ses deux pièces (41 et 42) l'une sur l'autre;
- on introduit dans l'ébauche (30), par l'intérieur creux (235) du noyau (23), de l'air comprimé à une pression telle que la matière dont l'ébauche (30) est faite se déforme et s'expanse jusqu'à épouser les formes de la cavité (411) et présenter ainsi les dimensions et les formes du corps (1) du contenant;
- on sépare les deux pièces (41 et 42) du moule (40) pour que celui-ci soit ouvert;
- on extrait hors du moule (40) ouvert le noyau (23) et le contenant qui tient à lui par l'intérieur de son col (2);
- on sépare le noyau (23) du contenant terminé, présentant en une seule pièce le corps (1), son fond (1a) et le col (2).
